# EUROPÄISCHE PATENTSCHRIFT

(11) **EP 1 333 296 B1**
(45) Veröffentlichungstag und Bekanntmachung des Hinweises auf die Patenterteilung: **18.05.2005**
(21) Anmeldenummer: 03002433.5
(22) Anmeldetag: 05.02.2003
(51) Int. Cl.: G01S 13/93, B60Q 1/48

(54) **Verfahren zur Bestimmung eines Abstandes zwischen im Wesentlichen in einer Ebene sich befindenden Gegenständen**
Method for determining the distance between two objects located in the same plane
Procédé pour déterminer la distance entre deux objets situés dans le même plan

(30) Priorität: 05.02.2002 DE 10204461
(43) Veröffentlichungstag der Anmeldung: 06.08.2003
(73) Patentinhaber: ROBERT BOSCH GMBH, 70442 Stuttgart (DE)
(72) Erfinder: Gauger, Christoph, 71083 Herrenberg (DE); Noll, Martin, 76461 Muggensturm (DE); Uhler, Werner, 76646 Bruchsal (DE); Danz, Christian, 70469 Stuttgart (DE); Schmid, Roland, 70599 Stuttgart (DE)

(56) Entgegenhaltungen:
- DE-A- 3 844 340
- DE-A- 19 949 409
- FR-A- 2 743 151
- GB-A- 2 319 420
- PATENT ABSTRACTS OF JAPAN vol. 018, no. 424 (M-1652), 9. August 1994 (1994-08-09) & JP 06 127318 A (NISSAN MOTOR CO LTD), 10. Mai 1994 (1994-05-10)
- PATENT ABSTRACTS OF JAPAN vol. 018, no. 247 (P-1735), 11. Mai 1994 (1994-05-11) & JP 06 028598 A (NISSAN MOTOR CO LTD), 4. Februar 1994 (1994-02-04)

## Beschreibung

### Technisches Gebiet

Die Erfindung betrifft ein Verfahren zur Bestimmung eines Abstandes zwischen zwei im Wesentlichen in einer Ebene sich befindenden Gegenständen durch ein sich im Wesentlichen parallel an den Gegenständen vorbei bewegendes System.

### Stand der Technik

Es ist allgemein bekannt, an Fahrzeugen so genannte Abstandswarner anzuordnen, die, beispielsweise mittels einer Ultraschallmessung, akustische Warnsignale abgeben, wenn der Abstand zu einem vorderen oder hinteren Fahrzeug einen vorgebbaren Mindestwert unterschreitet. Derartige Einrichtungen können als Einparkhilfen genutzt werden.

Aus der DE 196 16 447 A1 ist ein Verfahren zur Ermittlung der Länge einer Parklücke zwischen einem vorderen und einem hinteren parkenden Fahrzeug bekannt. Hierbei wird während einer langsamen Vorbeifahrt an wenigstens dem hinteren parkenden Fahrzeug unter Verwendung wenigstens einer Sende- und -Empfangseinrichtung für Signalstrahlen durch Auswertung von Rückstreusignalen die Position des fahrenden Fahrzeugs in Fahrtrichtung relativ zu dem vorderen Ende des hinteren parkenden Fahrzeugs und ausgehend von dieser Position der Abstand des vorderen parkenden Fahrzeugs von dem fahrenden Fahrzeug bestimmt und hieraus der Abstand der beiden parkenden Fahrzeuge zueinander ermittelt. Hierbei ist nachteilig, dass für die Vermessung der Parklücke ein Geschwindigkeitssignal des fahrenden Fahrzeugs berücksichtigt werden muss. Neben dem erhöhten Aufwand ergeben sich hierdurch zusätzliche Fehlerquellen, so dass die ermittelte Länge der Parklücke mit Ungenauigkeiten behaftet ist.

Aus der DE 297 18 862 U1 ist eine Anordnung zum Erleichtern des Parkens von Kraftfahrzeugen bekannt, bei der eine Länge einer Parklücke mittels eines Wegsensors ermittelt wird, der an einem sich an der Parklücke vorbeibewegenden Fahrzeug angeordnet ist. Hierbei ist nachteilig, dass zum Vermessen der Parklücke eine relativ lange Zeitspanne benötigt wird, da der Wegsensor zunächst über die gesamte Länge der zu vermessenden Parklücke durch das vorbeifahrende Fahrzeug bewegt werden muss. Aus der DE 41 37 068 A1 ist ein integrierter optischer Vielfachabstandssensor bekannt, bei dem zur Positionserkennung von Objekten in einem Flächen- oder Raumwinkelbereich eine Entfernungsmessung nach dem Triangulationsprinzip durchgeführt wird.

Aus der DE 38 44 340 A1 ist eine Einparkhilfe bekannt, bei der ein Sensorsystem eine Parklücke erkennt und die geometrische Lage der Parklücke vermisst. Hierzu sind an den Fahrzeugecken Sensoren angeordnet, die von der Ecken ausgehende Strahlkeulen aufweisen.

Aus der FR 2 743 151 A1 ist ein Erkennungs- und Messsystem für Parklücken bekannt, bei dem an einer Fahrzeugseite zwei Sensoren angeordnet sind, die die Abstände zu Rändern der Parklücke erfassen, wobei aus den gemessenen Abstandwerten die Parklückenlänge berechnet wird.

Aus der JP 06-028 598 und der GB 2 319 420 A sind Parklückenvermessungssysteme bekannt, bei denen Sensorsignale seitlich im Bezug auf die Fahrtrichtung des Fahrzeugs ausgestrahlt werden. Aus der JP 06-127 318 ist eine Parklückenvermessung bekannt, bei der Sensoren an den Fahrzeugecken angeordnet sind.

Die DE 199 49 409 A1 zeigt ein Verfahren zur Objektdetektierung, bei dem sich die Detektionsbereiche zweier benachbarter Sensoren überschneiden. Durch eine dynamische Objektbeobachtung wird die Detektion von Scheinobjekten verhindert.

### Darstellung der Erfindung, Aufgabe, Lösung, Vorteile

Es ist Aufgabe der vorliegenden Erfindung, ein Verfahren der gattungsgemässen Art anzugeben, mit dem in einfacher Weise ein Abstand zwischen zwei Gegenständen von einem bewegten System schnell und genau bestimmt werden kann.

Diese Aufgabe wird durch ein Verfahren mit den in Anspruch 1 gekennzeichneten Merkmalen gelöst.

Das erfindungsgemäße Verfahren mit den in Anspruch 1 genannten Merkmalen bietet den Vorteil, dass der Abstand zwischen zwei im Wesentlichen in einer Ebene sich befindenden Gegenständen durch ein sich im Wesentlichen parallel an den Gegenständen vorbeibewegendes System mit hoher Genauigkeit festgestellt werden kann. Dadurch, dass von dem System in Bewegungsrichtung und entgegen der Bewegungsrichtung jeweils in zwei sich teilweise überlappenden Flächen- oder Raumwinkelbereichen Sensorsignale gesendet werden, die von sich in Überlappungsbereichen der Flächen- oder Raumwinkelbereiche sich befindenden Gegenständen reflektierten Sensorsignale vom System empfangen werden und bei sich in den Überlappungsbereichen befindenden Gegenständen deren Abstand zueinander aus den empfangenen Signalen ermittelt wird, wird vorteilhaft möglich, unabhängig von einem zurückgelegten Weg und/oder einer Momentangeschwindigkeit des sich bewegenden Systems den Abstand der Gegenstände mit hoher Genauigkeit zu bestimmen.

Die Bestimmung des Abstandes zwischen den Gegenständen wird vorzugsweise mit jeweils zwei unter unterschiedlichen Winkeln zu einer Längsachse des sich bewegenden Systems ausgerichteten Sensoren realisiert. Hierdurch kann in den Überlappungsbereichen der sich überlappenden Flächen- und/oder Raumwinkelbereiche der Sensorsignale sich befindende Gegenstände durch an sich bekannte Triangulation der empfangenen reflektierten Sensorsignale der Abstand der Gegenstände und die Form der Gegenstände genau erfasst werden. Da die Positionsbestimmung von sich in den Überlappungsbereichen der Flächen- und/oder Raumwinkelbereiche der Sensorsignale sich befindenden Gegenstände zeitgleich sowohl in als auch entgegen der Bewegungsrichtung des Systems erfolgt, kann durch den bekannten - sich nicht ändernden-Abstand der Sensoren am sich bewegenden System der Abstand der detektierten Gegenstände ermittelt werden.

In weiterer bevorzugter Ausgestaltung der Erfindung ist vorgesehen, dass die die sich teilweise überlappenden Flächen- oder Raumwinkelbereiche bildenden Sensorsignale jeweils unter korrespondierenden Winkeln zu der Längsachse des Systems ausgesendet werden. Hierdurch wird vorteilhaft möglich, mittels des Systems sowohl - in Bezug auf die Bewegungsrichtung - sich rechts und/oder links befindende Gegenstände deren Abstand genau zu bestimmen.

Ferner ist in bevorzugter Ausgestaltung der Erfindung vorgesehen, dass das erfindungsgemäße Verfahren bei der Ermittlung der Länge einer Parklücke zwischen einem vorderen und einem hinteren parkenden Fahrzeug während der Vorbeifahrt eines Fahrzeugs eingesetzt wird. Hierdurch wird eine Parklückenvermessung mit hoher Genauigkeit möglich, so dass einem Fahrzeugführer und/oder einem Parkpiloten des vorbeifahrenden Fahrzeugs sofort eine Information zur Verfügung steht, ob die Länge der vermessenen Parklücke zum Einparken ausreichend ist.

Darüber hinaus ist in bevorzugter Ausgestaltung der Erfindung vorgesehen, dass der ermittelte Abstand zwischen den Gegenständen (parkende Fahrzeuge) automatisch mit einem vorgebbaren Wert für einen Mindestabstand (Mindestlänge einer Parklücke) verglichen wird und das Ergebnis des Vergleichs angezeigt wird. Die Anzeige kann vorzugsweise optisch und/oder akustisch erfolgen. Bevorzugt ist hierbei, wenn die Anzeige nur dann erfolgt, wenn der Abstand der Gegenstände (parkende Fahrzeuge) größer ist als der vorgebbare Mindestabstand. Hierbei ist ferner bevorzugt, wenn bei Feststellung eines über den vorgebbaren Mindestabstand hinausgehenden Abstandes zwischen den Gegenständen (parkende Fahrzeuge) automatisch ein Parkpilot einen Einparkvorgang des an der Parklücke vorbeifahrenden Fahrzeugs vornimmt. Hierdurch wird ein möglichst schnelles und gefahrloses Einparken des Fahrzeugs möglich, so dass eine Behinderung des weiteren fließenden Verkehrs auf ein Minimum beschränkt bleibt.

Weitere bevorzugte Ausgestaltungen der Erfindung ergeben sich aus den übrigen, in den Unteransprüchen genannten Merkmalen.

### Kurze Beschreibung der Zeichnungen

Nachstehend wird die Erfindung in Ausführungsbeispielen anhand der zugehörigen Zeichnungen näher erläutert. Es zeigen:
- Fig. 1: eine schematische Draufsicht auf ein Kraftfahrzeug;
- Fig. 2: schematisch ein Messvorgang zur Bestimmung eines Abstandes und
- Fig. 3: ein Blockschaltbild mit dem Ablauf des Verfahrens zum Bestimmen des Abstandes.

### Bester Weg zur Ausführung der Erfindung

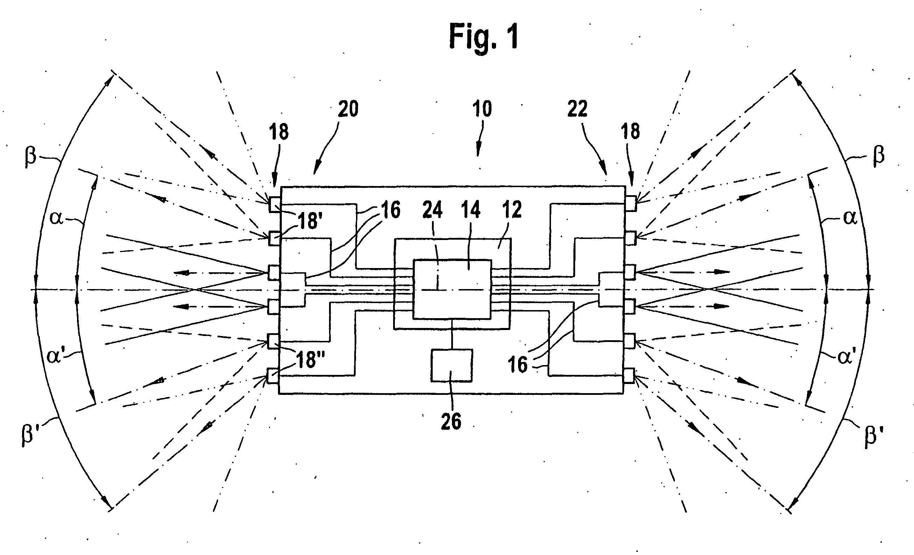

Fig. 1 zeigt in schematischer Draufsicht ein insgesamt mit 10 bezeichnetes Kraftfahrzeug. Das Kraftfahrzeug 10 umfasst ein Einparkhilfssystem 12 (Parkpilot). Das Einparkhilfssystem 12 umfasst ein Steuergerät 14, das über Verbindungen 16 mit Sensoren 18 verbunden ist. Gemäß dem gezeigten Ausführungsbeispiel sind in einem Frontbereich 20 des Kraftfahrzeuges 10 insgesamt sechs Sensoren 18 und in einem Heckbereich 22 des Kraftfahrzeugs ebenfalls insgesamt sechs Sensoren 18 angeordnet. Bezogen auf eine Längsachse 24 des Kraftfahrzeuges 10 sind hierbei sowohl im Frontbereich 20 als auch im Heckbereich 22 jeweils drei Sensoren 18 rechts und drei Sensoren 18 links der Längsachse 24 angeordnet. Die Sensoren verfügen jeweils über eine Sende- und Empfangseinrichtung für Signalstrahlen.

Die Sensoren 18 besitzen jeweils eine Hauptwirkrichtung (Hauptstrahlrichtung). Die Hauptwirkrichtung der mittleren Sensoren 18 verläuft hierbei im Wesentlichen parallel zur Längsachse 24. Die Hauptwirkrichtung der Sensoren 18' (die beiden äußeren rechten - gemäß Darstellung oberen - Sensoren 18 zur Längsachse 24) verläuft hierbei unter unterschiedlichen Winkeln α beziehungsweise β zur Längsachse 24. Entsprechend der Strahlrichtung der Sensoren 18' im Frontbereich 20 beziehungsweise im Bereich 22 öffnen sich die Winkel α beziehungsweise β in beziehungsweise entgegen einer gedachten Fahrtrichtung des Kraftfahrzeugs 10. Die beiden äußeren Sensoren 18", die links - gemäß Darstellung unten - der Mittellinie 24 angeordnet sind, verlaufen unter komplementären Winkeln α' beziehungsweise β'. Die Winkel α beziehungsweise β können hierbei im Frontbereich 20 beziehungsweise im Heckbereich 22 unterschiedlich groß gewählt sein.

Das Steuergerät 14 ist ferner mit einem Wegsignalgeber 26 verbunden.

Die Sensoren 18 können beispielsweise Ultraschallsensoren, Radarsensoren, Videosensoren oder dergleichen sein.

Der allgemeine Aufbau und die Wirkungsweise des Einparkhilfssystems 12 sind bekannt, so dass im Rahmen der vorliegenden Beschreibung nicht näher darauf eingegangen werden soll.

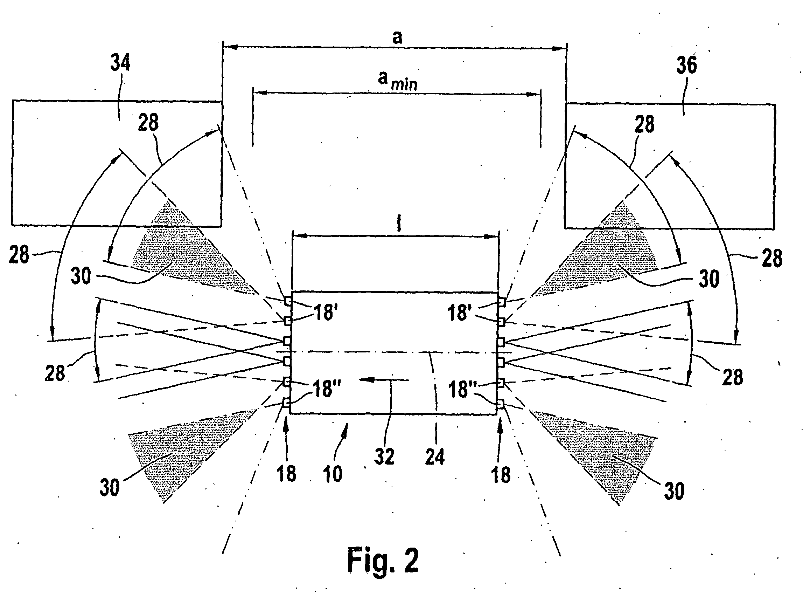

Anhand von Fig. 2 wird die Wirkungsweise des Einparkhilfssystems 12 zur Bestimmung der Länge einer Parklücke verdeutlicht. Gleiche Teile wie in Fig. 1 sind mit gleichen Bezugszeichen versehen und nicht nochmals erläutert.

In der Fig. 2 werden die Sensor-Erfassungsbereiche 28 der Sensoren 18 deutlich. Entsprechend der Hauptwirkrichtung der Sensoren 18 - wie anhand von Fig. 1 erläutert - sind die Sensor-Erfassungsbereiche 28 in Bezug auf die Längsachse 24 des Kraftfahrzeugs 10 unterschiedlich ausgerichtet. Zwischen zwei benachbarten Sensoren 18' beziehungsweise 18" bildet sich jeweils ein Überlappungsbereich 30 der Sensor-Erfassungsbereiche 28 aus. Das heißt, sich im Überlappungsbereich 30 befindende Gegenstände, Hindernisse, Fahrzeuge oder dergleichen werden durch die jeweils zwei benachbarten Sensoren 18' beziehungsweise 18" gleichzeitig erfasst.

In Fig. 2 ist gezeigt, dass das Kraftfahrzeug 10 sich in Richtung des dargestellten Pfeils 32 an schematisch angedeuteten parkenden Kraftfahrzeugen 34 beziehungsweise 36 vorbeibewegt.

Wird das Einparkhilfssystem 12 in einen Parklückenvermessungsmodus geschaltet, beispielsweise durch einen Fahrzeugführer, wird mittels des Einparkhilfssystems 12 der Abstand a zwischen den Kraftfahrzeugen 34 und 36 bestimmt. Hierbei wird mittels an sich bekannter Triangulationsverfahren die Position und die Form der sich eventuell in den Überlappungsbereichen 30 befindenden Kraftfahrzeuge 34 und 36 bestimmt. Position und Form der Kraftfahrzeuge 34 und 36 werden hierbei zeitgleich während des Vorbeifahrens des Kraftfahrzeugs 10 bestimmt. Die Ansteuerung der Sensoren 18 beziehungsweise die Auswertung der von den Kraftfahrzeugen 34 und 36 reflektierten Signale durch die Sensoren 18 erfolgt mittels des Steuergerätes 14 (Fig. 1).

Aufgrund des bekannten definierten Abstandes der Sensoren 18 in Richtung der Längsachse 24 des Kraftfahrzeuges 10 kann exakt der Abstand a der Kraftfahrzeuge 34 und 36 bestimmt werden. Da das Steuergerät 14 darüber hinaus eine Information über die Gesamtlänge I des Kraftfahrzeugs 10 besitzt, kann durch einfachen Vergleich des Abstandes a mit der Länge I ermittelt werden, ob die Parklücke zwischen den Kraftfahrzeugen 34 und 36 zum Einparken des Kraftfahrzeuges 10 ausreichend groß ist. Hierbei wird am Steuergerät 14 ein Schwellwert S abgespeichert, dessen Wert größer ist als ein der Länge I entsprechender Wert. Dieser Schwellwert S definiert den Mindestabstand aₘᵢₙ der Kraftfahrzeuge 34 und 36, der zum Einparken des Kraftfahrzeugs 10 notwendig ist. Wird nunmehr durch das Einparkhilfssystem 12 ermittelt a > aₘᵢₙ,kann entweder vom Fahrzeugführer oder automatisch vom Parkpiloten der Einparkvorgang gestartet werden.

Die Größe der Erfassungsbereiche 28 beziehungsweise der Überlappungsbereiche 30 sind durch die Sende- beziehungsweise Empfangscharakteristiken der Sensoren 18 definiert. Für die Zwecke der Bestimmung des Abstandes a ist ausreichend, wenn die Intensität der Sensoren so gewählt ist, dass die Messung des Abstandes a erst einsetzt, wenn ein Abstand aₘₐₓ unterschritten wird. Dieser Abstand aₘₐₓ wird durch die Reichweite der Sensoren 18 (hier insbesondere durch die Reichweite der Überlappungsbereiche 30) bestimmt. Wird der Abstand aₘₐₓ nicht unterschritten, ist die Parklücke in jedem Fall ausreichend groß zum Einparken des Kraftfahrzeuges 10.

Anhand der Erläuterungen wird deutlich, dass der Parklückenvermessungsmodus ohne weiteres in ein bestehendes Steuergerät 14 eines Einparkhilfssystems 12 integriert werden kann. Die Sensoren 18 sind vorzugsweise baugleich, so dass sich der Ausstattungsaufwand für ein Kraftfahrzeug 10 begrenzen lässt. Soll ein Kraftfahrzeug 10 ausschließlich in einem Parklückenvermessungsmodus betreibbar sein, kann auf die mittleren Sensoren 18 jeweils verzichtet werden.

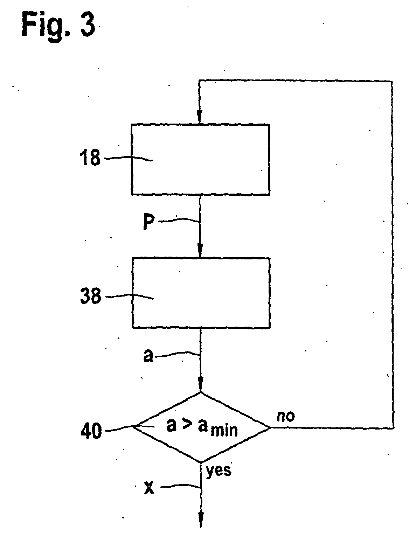

Fig. 3 verdeutlicht in einem Blockschaltbild den Ablauf des Verfahrens zum Bestimmen des Abstandes a. Von den Sensoren 18 werden Positionssignale Pᵣᵥ, Pₗᵥ, Pᵣₕ beziehungsweise Pₗₕ einem Positionsbaustein 38 übermittelt. Die Positionssignale P entsprechen hierbei dem jeweils durch den Sensor 18 ermittelten Kraftfahrzeug in den Überlappungsbereichen 30. Je nachdem, ob sich ein Kraftfahrzeug in dem vorderen rechten, vorderen linken, hinteren rechten beziehungsweise hinteren linken Überlappungsbereich 30 befindet, wird ein entsprechendes Positionssignal Pᵣᵥ, Pₗᵥ, Pᵣₕ beziehungsweise Pₗₕ geliefert. Dem Baustein 38 steht ein der Länge I des Kraftfahrzeugs 10 entsprechendes Signal zur Verfügung, so dass dieser über die bekannte Position der Sensoren 18 am Kraftfahrzeug 10 beziehungsweise die Länge I des Kraftfahrzeugs 10 mittels Triangulationsverfahren den Abstand a ermittelt. Das Signal a wird einem Auswertebaustein 40 zugeführt, der ein Signal aₘᵢₙ erhält, das den minimal notwendigen Abstand aₘᵢₙ zum Einparken des Kraftfahrzeuges 10 definiert. Dieser richtet sich nach der Länge I des Kraftfahrzeugs 10 und der Manövrierfähigkeit des Kraftfahrzeugs 10. Ist das Signal a größer als das Signal aₘᵢₙ, liefert der Auswertebaustein 40 ein Einparksignal x. Das Einparksignal x kann entweder optisch und/oder akustisch einem Fahrzeugführer gegeben werden oder es dient als Steuersignal für ein automatisches Einparkmittel eines Einparkpiloten.

## Patentansprüche

1. Verfahren zur Bestimmung eines Abstandes zwischen zwei im Wesentlichen in einer Ebene sich befindenden Gegenständen durch ein sich im Wesentlichen parallel an den Gegenständen vorbeibewegendes System,
**dadurch gekennzeichnet, dass**
von dem System (10) in Bewegungsrichtung (32) und entgegen der Bewegungsrichtung (32) jeweils in zwei sich teilweise überlappenden Flächen- oder Raumwinkelbereichen (28) Sensorsignale gesendet werden, die von sich in Überlappungsbereichen (30) der Flächen- oder Raumwinkelbereiche (28) sich befindenden Gegenständen (34, 36) reflektierten Sensorsignale vom System empfangen werden und bei sich in den Überlappungsbereichen (30) befindenden Gegenständen (34, 36) deren Abstand (a) zueinander aus den empfangenen Signalen ermittelt wird.

2. Verfahren nach Anspruch 1,
**dadurch gekennzeichnet, dass**
die die sich teilweise überlappenden Flächen- oder Raumwinkelbereiche (28) bildenden Sensorsignale unter unterschiedlichen Winkeln (α, β) zu einer Längsachse (24) des Systems ausgesendet werden.

3. Verfahren nach einem der vorhergehenden Ansprüche,
**dadurch gekennzeichnet, dass**
die die sich teilweise überlappenden Flächen- oder Raumwinkelbereiche (28) bildenden Sensorsignale jeweils unter korrespondierenden Winkeln (α,α',β,β') zur Längsachse (24) des Systems ausgesendet werden.

4. Verfahren nach einem der vorhergehenden Ansprüche,
**dadurch gekennzeichnet, dass**
die Positionen von Gegenständen (34, 36) in den Überlappungsbereichen (30) mittels Triangulationsverfahren bestimmt werden.

5. Verfahren nach einem der vorhergehenden Ansprüche,
**dadurch gekennzeichnet, dass**
die Länge einer Parklücke zwischen einem vorderen parkenden Fahrzeug (34) und einem hinteren parkenden Fahrzeug (36) bestimmt wird.

6. Verfahren nach einem der vorhergehenden Ansprüche,
**dadurch gekennzeichnet, dass**
die Länge der Parklücke (Abstand a) mit einem vorgebbaren Wert für einen Mindestabstand (aₘᵢₙ) verglichen wird und das Ergebnis des Vergleichs angezeigt wird.

7. Verfahren nach einem der vorhergehenden Ansprüche,
**dadurch gekennzeichnet, dass**
in Abhängigkeit eines Ergebnisses des Vergleichs, insbesondere wenn a > aₘᵢₙ, ein Einparkvorgang eines Kraftfahrzeugs (10) ausgelöst wird.

8. Verfahren nach einem der vorhergehenden Ansprüche,
**dadurch gekennzeichnet, dass**
die Länge der Parklücke aus von den Sensoren (18) empfangenen Positionssignalen der Fahrzeuge (34, 36) in den Überlappungsbereichen und einem bekannten definierten Abstand der Sensoren (18) über die Länge des Kraftfahrzeugs (10) zueinander bestimmt wird.

9. Verfahren nach einem der vorhergehenden Ansprüche,
**dadurch gekennzeichnet, dass**
der Mindestabstand (aₘᵢₙ) in Abhängigkeit einer Länge (I) des Kraftfahrzeugs (10) und einer Manövrierfähigkeit des Kraftfahrzeugs (10) als Schwellwert (S) vorgegeben wird.

10. Verfahren nach einem der vorhergehenden Ansprüche,
**dadurch gekennzeichnet, dass**
der Einparkvorgang durch einen Parkpiloten ausgelöst wird.

11. Verfahren nach einem der Ansprüche 1 bis 9,
**dadurch gekennzeichnet, dass**
der Einparkvorgang durch einen Fahrzeugführer ausgelöst wird.

## Claims

1. Method for determining a distance between two objects located essentially in one plane, by means of a system which moves past the objects essentially in parallel with them, **characterized in that** sensor signals are transmitted by the system (10) in the direction (32) of movement and counter to the direction (32) of movement, in each case in two partially overlapping solid angle ranges (28), the sensor signals which are reflected by objects (34, 36) which are located in overlapping regions (30) of the solid angle ranges (28) are received by the system, and when there are objects (34, 36) which are located in the overlapping regions (30) the distance (a) between said objects (34, 36) is determined from the received signals.

2. Method according to Claim 1, **characterized in that** the sensor signals which form the partially overlapping solid angle ranges (28) are emitted at different angles (α, β) with respect to a longitudinal axis (24) of the system.

3. Method according to one of the preceding claims, **characterized in that** the sensor signals which form the partially overlapping solid angle regions (28) are each emitted at corresponding angles (α, α' β, β') with respect to the longitudinal axis (24) of the system.

4. Method according to one of the preceding claims, **characterized in that** the positions of objects (34, 36) in the overlapping regions (30) are determined by means of triangulation methods.

5. Method according to one of the preceding claims, **characterized in that** the length of a parking gap between a front, parked vehicle (34) and a rear, parked vehicle (36) is determined.

6. Method according to one of the preceding claims, **characterized in that** the length of the parking gap (distance a) is compared with a predefinable value for a minimum distance (aₘᵢₙ) and result of the comparison is displayed.

7. Method according to one of the preceding claims, **characterized in that** a parking process of a motor vehicle (10) is triggered as a function of a result of the comparison, in particular if a > aₘᵢₙ.

8. Method according to one of the preceding claims, **characterized in that** the length of the parking gap is determined from position signals - received from the sensors (18) - of the vehicles (34, 36) in the overlapping regions and from a known defined distance between the sensors (18) over the length of the motor vehicle (10).

9. Method according to one of the preceding claims, **characterized in that** the minimum distance (aₘᵢₙ) is predefined as a function of a length (I) of the motor vehicle (10) and a manoeuvring capability of the motor vehicle (10) as a threshold value (S).

10. Method according to one of the preceding claims, **characterized in that** the parking process is triggered by a parking pilot.

11. Method according to one of Claims 1 to 9, **characterized in that** the parking process is triggered by a driver of a vehicle.

## Revendications

1. Procédé pour la détermination d'une distance entre deux objets qui se trouvent sensiblement dans un même plan, exécutée par un système qui se déplace sensiblement de façon parallèle le long des objets,
**caractérisé en ce que**
le système (10) envoie à chaque fois, dans le sens du déplacement (32) et en sens inverse du déplacement (32), des signaux de capteurs dans deux régions d'angles plans ou d'angles solides (28) qui se chevauchent partiellement, les signaux de capteurs, qui sont réfléchis par des objets (34, 36) se trouvant dans les régions de chevauchement (30) des régions d'angles plans ou d'angles solides (28), sont reçus par le système et, si des objets (34, 36) se trouvent dans les régions de chevauchement (30), leur distance mutuelle (a) est déterminée sur la base des signaux reçus.

2. Procédé selon la revendication 1,
**caractérisé en ce que**
les signaux de capteurs qui forment les régions d'angles plans ou d'angles solides (28) qui se chevauchent partiellement sont émis sous différents angles (α, β) par rapport à un axe longitudinal (24) du système.

3. Procédé selon une des revendications précédentes,
**caractérisé en ce que**
les signaux de capteurs qui forment les régions d'angles plans ou d'angles solides (28) se chevauchant partiellement, sont émis à chaque fois sous des angles correspondants (α, α', β, β') par rapport à l'axe longitudinal (24) du système.

4. Procédé selon une des revendications précédentes,
**caractérisé en ce que**
les positions d'objets (34, 36) situés dans les régions de chevauchement (30) sont déterminées par un procédé de triangulation.

5. Procédé selon une des revendications précédentes,
**caractérisé en ce que**
la longueur d'une place de stationnement libre entre un véhicule (34) stationné en avant et un véhicule (36) stationné en arrière est déterminée.

6. Procédé selon une des revendications précédentes,
**caractérisé en ce que**
la longueur de la place de stationnement libre (distance a) est comparée à une valeur pouvant être prédéterminée pour une distance minimale (aₘᵢₙ) et le résultat de la comparaison est affiché.

7. Procédé selon une des revendications précédentes,
**caractérisé en ce qu'**
en fonction d'un résultat de la comparaison, en particulier lorsque a > aₘᵢₙ, une opération de parcage d'un véhicule automobile (10) est déclenchée.

8. Procédé selon une des revendications précédentes,
**caractérisé en ce que**
la longueur de la place de stationnement libre est déterminée d'après les signaux de position des véhicules (34, 36) situés dans les régions de chevauchement qui sont reçus par les capteurs (18) et d'après une distance définie connue des capteurs (18) mesurée sur la longueur du véhicule automobile (10).

9. Procédé selon une des revendications précédentes,
**caractérisé en ce que**
la distance minimale (aₘᵢₙ) est prédéterminée en tant que valeur de seuil (S) en fonction d'une longueur (1) du véhicule automobile (10) et de l'aptitude à manoeuvrer du véhicule automobile (10)

10. Procédé selon une des revendications précédentes,
**caractérisé en ce que**
l'opération de parcage est déclenchée par un pilote de parc de stationnement.

11. Procédé selon une des revendications 1 à 9,
**caractérisé en ce que**
l'opération de parcage est déclenchée par un conducteur de véhicule.
